# FASCICULE DE BREVET EUROPEEN

(11) **EP 1 141 797 B1**
(45) Date de publication et mention de la délivrance du brevet: **22.09.2004**
(21) Numéro de dépôt: 99972752.2
(22) Date de dépôt: 15.11.1999
(51) Int. Cl.: G05B 19/4099

(54) **PROCEDE DE REALISATION DE PIECES MECANIQUES PAR DECOMPOSITION EN STRATES**
VERFAHREN ZUR HERSTELLUNG VON MECHANISCHEN TEILEN DURCH AUFTEILUNG IN SCHICHTEN
METHOD FOR MAKING MECHANICAL PARTS BY DECOMPOSITION INTO LAYERS

(30) Priorité: 19.11.1998 FR 9814687
(43) Date de publication de la demande: 10.10.2001
(73) Titulaire: C.I.R.T.E.S. (Centre d'Ingenierie de Recherche et de Transfert de l'Esstin a Saint-Die), 88100 Saint-Dié (FR)
(72) Inventeur: BARLIER, Claude, F-88100 Coinches (FR)
(74) Mandataire: Poupon, Michel
(86) Numéro de dépôt international: PCT/FR1999/002790
(87) Numéro de publication internationale: WO 2000/031600

(56) Documents cités:
- EP-A- 0 585 502
- EP-A- 0 606 627
- EP-A- 0 655 317
- EP-A- 0 738 583
- WO-A-95/08416
- US-A- 4 001 069

## Description

La présente invention a pour objet un perfectionnement aux procédés de réalisation de pièces mécaniques et objets en particulier de prototypes à partir d'une conception assistée par ordinateur spécifique du type comportant les phases successives de :
- fabrication des pieces en couches ou strates élémentaires ;
- reconstitution de l'ensemble des couches ;
- assemblage des couches ;
lesdites strates étant issues d'une décomposition préalable de la pièce selon des plans et un ou des pas déterminés.

Un procédé de prototypage rapide de ce type a fait l'objet du brevet européen EP 0 585 502 (B1) et est connu sous le nom de STRATOCONCEPTION (marque déposée).

Ce procédé donne entière satisfaction dans les limites des applications spécifiées dans ce brevet, le positionnement et l'assemblage des différentes strates étant essentiellement obtenus par des inserts dont la forme et le positionnement sont déterminés également par un logiciel spécifique.

Le fait de prévoir des inserts à l'intérieur, pour des pièces d'une certaine épaisseur, apporte néanmoins une certaine lourdeur au procédé de mise en oeuvre, par ailleurs très souple et très performant. Ceci est proposé en outre par le document US 4 001 069 (A).

Néanmoins il n'est pas possible de prévoir facilement des inserts à l'intérieur pour des strates dont la section utile (épaisseur de la pièce finale) est faible, strates nécessaires pour l'obtention d'une modélisation très fine, donc plus précise, ou pour la réalisation de pièces dont la structure complexe implique une décomposition passant par des strates de très faible épaisseur latérale.

Par ailleurs on a déjà proposé dans les documents EP 0 738 583 (A) et EP 0 655 317 (A) la réalisation d'une structure porteuse extérieure, difficile à supprimer après positionnement des strates.

L'invention a pour objet de proposer un procédé selon le concept général du brevet EP 0 585 502 permettant en outre de s'abstenir éventuellement de l'utilisation d'inserts d'assemblage à l'intérieur des strates entre elles et de positionnement des strates, l'une par rapport à l'autre.

Conformément à l'invention, ce résultat est obtenu avec un procédé de réalisation des pièces mécaniques et objets, en particulier de prototypes, à partir d'une conception assistée par ordinateur spécifique du type comportant les phases successives de :
- fabrication des pièces en couches ou strates élémentaires ;
- reconstitution de l'ensemble des strates ;
- assemblage des strates ;
lesdites strates étant issues d'une décomposition préalable de la pièce selon des plans et un ou des pas déterminés, étant les strates unitaires déterminées par la décomposition de la pièce mettant en oeuvre un logiciel et usinées en conséquence et comportant essentiellement :
- une partie centrale correspondant effectivement à la strate ayant la forme et l'épaisseur recherchées pour l'obtention de la pièce finie,
- une partie extérieure sensiblement de même épaisseur, enveloppant au moins partiellement ladite partie centrale, caractérisé en ce que des pontets sécables relient lesdites parties centrale et extérieure entre elles et que des orifices de positionnement et d'assemblage sont rapportés sur la partie extérieure, cette partie grâce aux pontets sécables étant supprimée après positionnement et assemblage.

L'assemblage des strates entre elles est ensuite opéré par superposition ou échafaudage des différentes strates, les parties extérieures de chaque strate formant finalement une sorte d'enveloppe porteuse enserrant la pièce reconstituée à laquelle elle est reliée par les pontets sécables.

On comprendra que la décomposition de la pièce et l'assemblage sont obtenus de manière systématique par l'utilisation du logiciel spécifique qui positionne et prévoit automatiquement les pontets, les piliers, les inserts intérieurs ou extérieurs.

Ainsi, des inserts de positionnement et de maintien sont rapportés sur l'enveloppe extérieure. Ceux-ci permettent de positionner les strates de manière indirecte par montage et assemblage (par exemple, par collage).

L'enveloppe porteuse est ensuite supprimée facilement, du fait des pontets sécables, après positionnement des strates et assemblage.

L'enveloppe englobera la pièce finale au plus près, pour des raisons de précision d'assemblage et d'économie de matière, ce qui nécessite dans tous les cas de figure un système de pressage par bridage.

Le système de pressage pourra être extérieur, par exemple avec une plaque de montage, ou intégré, l'enveloppe étant autoporteuse.

On comprendra mieux l'invention à l'aide de la description ci-après faite en référence aux dessins annexés dans lesquels :
- la figure 1 illustre schématiquement sous forme d'un diagramme le principe de mise en oeuvre du procédé dit de stratoconception ;
- la figure 2 illustre schématiquement une pièce reconstituée à partir de strates élémentaires avec enveloppe extérieure, conformément à l'invention ;
- les figures 3A à 3F représentent des variantes de réalisation des pontets sécables et des enveloppes extérieures ;
- la figure 4 représente la pièce de la figure 2 avec une structure de maintien et d'assemblage autoporteuse ;
- la figure 5 représente une variante de la pièce de la figure 2 avec une structure de maintien et d'assemblage faisant appel à une plaque de montage ;
- les figures 6 et 7 représentent une variante de la pièce de la figure 2, avec une variante d'assemblage de même type que celui des figures 2 et 5 ;
- la figure 8 illustre en coupe partielle un assemblage possible avec inserts extérieurs pour des formes complexes et des strates fines.

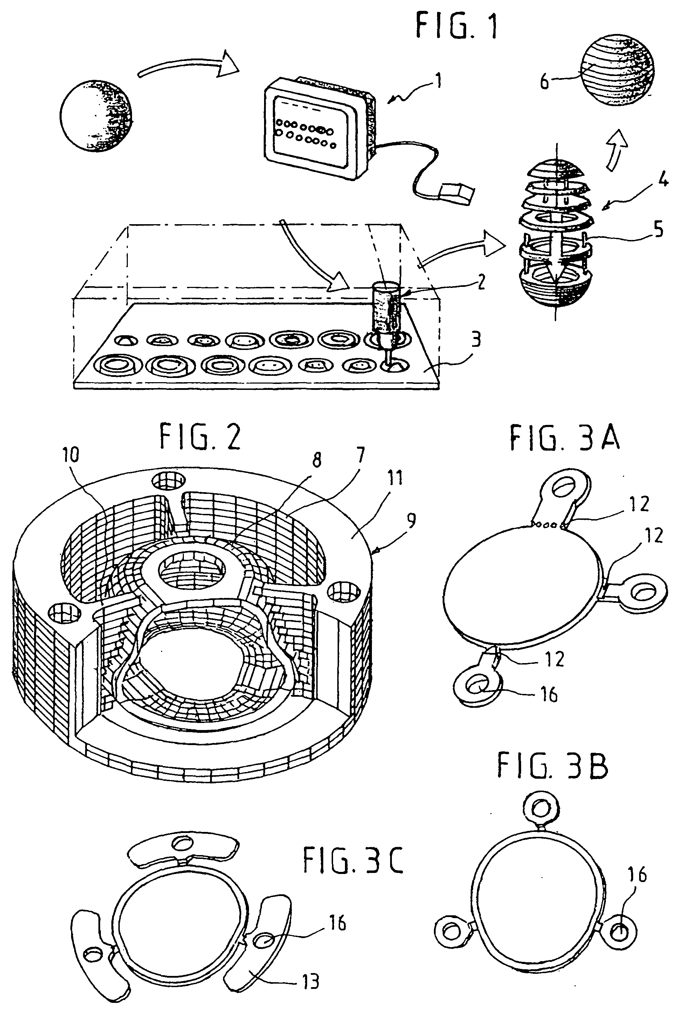

On se référera tout d'abord à la figure 1.

Le principe général consiste, par la mise en oeuvre d'un logiciel spécifique (1), à découper en strates une pièce à prototyper, les strates étant usinées par micro fraisage rapide (2), la machine étant pilotée par le logiciel (1), d'un matériau en plaque (3).

Les différentes strates sont assemblées selon un ensemble (4) comportant des inserts (5) pour obtenir finalement un prototype (6) après finition.

Le logiciel gère le choix du plan de tranchage/stratification, du pas du profil de strate, du rapport d'échelle, de la précision, du positionnement des inserts.

Après la saisie des différents paramètres de plaque (dimensions ; matériau, choix du sens de dépouille) et des paramètres d'usinage (vitesse de coupe, diamètre de fraise, etc...) l'ensemble du programme d'usinage est transmis par le logiciel qui pilote le robot de découpe.

On se référera maintenant à la figure 2 .

Selon l'invention, le procédé mis en oeuvre permet d'obtenir une multitude de strates élémentaires (7) qui, une fois assemblées, reproduisent la pièce à reproduire (8) reliée à une enveloppe extérieure (9) par des pontets (10).

On comprendra que, après assemblage adéquat, l'élimination de l'enveloppe et des pontets aboutisse à l'obtention de la pièce finale (8) en particulier prototype.

Les strates (7) peuvent être de formes géométriques différentes et très variées au niveau des pontets (10) et des éléments (11) formant finalement l'enveloppe extérieure (9).

Différentes variantes sont représentées aux figures 3A à 3F.

A la figure 3A on a représenté trois variantes de pontets au niveau de la zone de fragilisation (12) où s'effectuera la découpe.

A la figure 3B, on notera que la répartition des pontets, par exemple au nombre de trois, peut être régulière sur le pourtour de la partie centrale (en l'occurrence ici à 120°).

A la figure 3C, la variante consiste à ce que les éléments (11) soient des secteurs arrondis et enveloppants (13).

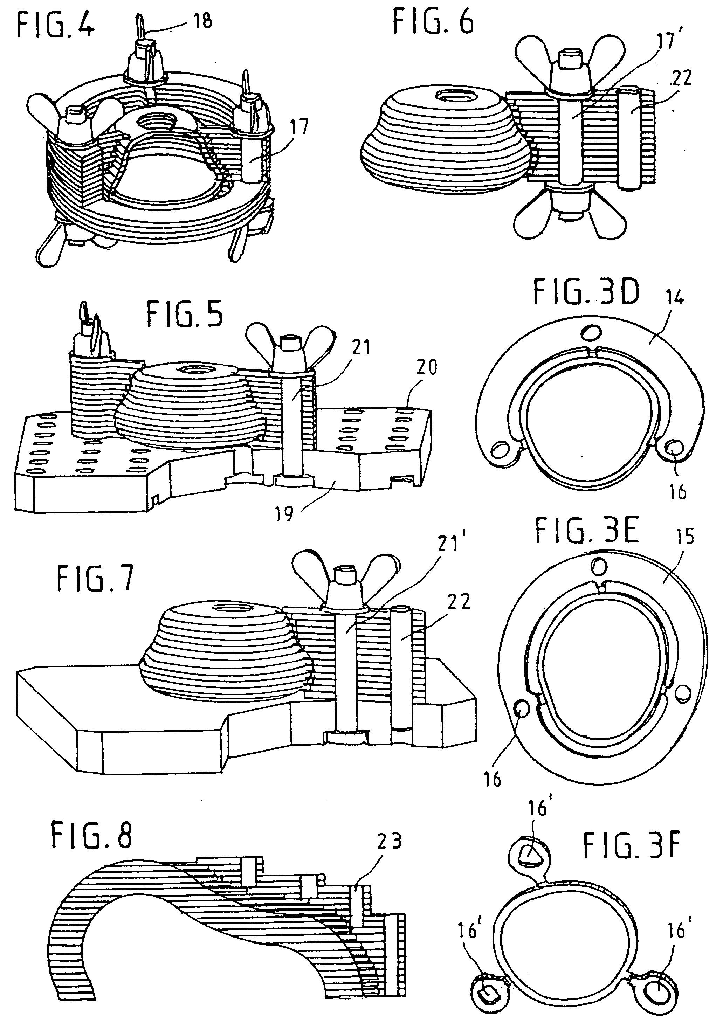

A la figure 3D, trois secteurs tels que (13) sont réunis pour former une platine unique (14), qui enserre totalement la pièce selon une couronne (15) à la représentation de la figure 3E.

Enfin, à la figure 3F, les orifices (16') présents dans chaque structure et servant à positionner et assembler les pontets entre eux seront non plus circulaires (16) comme aux figures précédentes, mais à section géométrique polygonale, ce qui permet d'en limiter le nombre sur une même strate pour un même positionnement précis.

Les strates sont assemblées sur des axes (17) qui, à la figure 4, sont au nombre de trois, ceux-ci comportant, par exemple mais non limitativement, des écrous papillons (18) de serrage. La structure est ici autoporteuse.

A la figure 5, on prévoit deux axes (21) fixés sur une plaque de montage (19) munie d'alésages (20).

Ce type d'assemblage peut être en outre utilisé lorsque le procédé est mis en oeuvre de manière systématique et par exemple à des fins pédagogiques, voire ludiques.

Aux figures 6 et 7, les structures sont identiques à celles des figures 4 et 5, avec un seul axe tel que (17',21') et une tige (22) de type insert pour assurer le positionnement.

Enfin, à la figure 8, on a représenté une variante complexe avec des inserts (23) pour des strates de très faibles épaisseurs, chaque insert concernant uniquement quelques strates jointives.

Bien entendu, chaque strate élémentaire sera usinée par microfraisage conformément au procédé général dit de « Stratoconception », éventuellement avec retournement si nécessaire en cours d'usinage selon le procédé décrit dans une demande de brevet déposée conjointement par la demanderesse et à laquelle il est fait expressément référence.

Ce procédé permet la réalisation de prototypes de pièces de formes très complexes, très rapidement et à faible coût. Il ouvre également des perspectives intéressantes d'applications pédagogiques et ludiques.

## Revendications

1. Procédé de réalisation de pièces mécaniques et objets, en particulier de prototypes, à partir d'une conception assistée par ordinateur spécifique du type comportant les phases successives de :
- fabrication des pièces en couches ou strates élémentaires ;
- reconstitution de l'ensemble des strates ;
- assemblage des strates ;
lesdites strates étant issues d'une décomposition préalable de la pièce selon des plans et un ou des pas déterminés, les strates unitaires étant déterminées par la décomposition de la pièce mettant en oeuvre un logiciel spécifique et usinées en conséquence et comportant :
- une partie centrale (8) correspondant effectivement à la strate ayant la forme et l'épaisseur recherchées pour l'obtention de la pièce finie,
- une partie extérieure (11) sensiblement de même épaisseur, enveloppant au moins partiellement ladite partie centrale, **caractérisé en ce que** des pontets sécables (10) relient lesdites parties centrale et extérieure entre elles et que des orifices de positionnement et d'assemblage sont rapportés sur la partie extérieure, cette partie grâce aux pontets sécables étant supprimée après positionnement et assemblage.

2. Procédé selon la revendication 1, **caractérisé en ce que** chaque strate comporte des orifices (16) circulaires de positionnement et d'assemblage des pontets entre eux.

3. Procédé selon la revendication 1, **caractérisé en ce que** chaque strate comporte des orifices (16') à section géométrique polygonale de positionnement et d'assemblage des pontets entre eux.

4. Procédé selon l'une quelconque des revendications 1 à 3, **caractérisé en ce que** les strates sont assemblées selon une structure autoporteuse.

5. Procédé selon l'une quelconque des revendications 1 à 3, **caractérisé en ce que** les strates sont assemblées sur une plaque de montage (19) munie d'alésages (20).

6. Procédé selon l'une quelconque des revendications 1 à 5, **caractérisé en ce que** l'assemblage est réalisé au moyen d'un axe unique (17',21') et d'une tige insert (22).

## Patentansprüche

1. Verfahren zur Herstellung von mechanischen Teilen und Objekten, insbesondere Prototypen, aus einem spezifischen computergestützten Entwurf, umfassend die folgenden aufeinander folgenden Phasen:
- Herstellung der Teile in elementaren Schichten oder Lagen;
- Wiederherstellung der Gesamtheit der Lagen;
- Zusammenbau der Lagen;
wobei die Lagen aus einer vorherigen Zerlegung des' Teils nach Ebenen und einem oder mehreren bestimmten Höhen stammen, wobei die einzelnen Lagen durch die Zerlegung des Teils durch Einsatz einer spezifischen Software bestimmt und folglich bearbeitet werden und umfassen:
- einen zentralen Teil (8), der effektiv der Lage entspricht, die die für den Erhalt des fertigen Teils gewünschte Form und Dicke aufweist,
- einen äußeren Teil (11) mit im Wesentlichen derselben Dicke, der zumindest teilweise den zentralen Teil umgibt,
**dadurch gekennzeichnet, dass** teilbare Bügel (10) den zentralen und den äußeren Teil miteinander verbinden, und dass Öffnungen zur Positionierung und Montage auf den äußeren Teil aufgesetzt sind, wobei dieser Teil dank der teilbaren Bügel nach der Positionierung und Montage entfernt wird.

2. Verfahren nach Anspruch 1, **dadurch gekennzeichnet, dass** jede Lage kreisförmige Öffnungen (16) zur Positionierung und Montage der Bügel miteinander umfasst.

3. Verfahren nach Anspruch 1, **dadurch gekennzeichnet, dass** jede Lage Öffnungen (16') mit einem polygonalen geometrischen Querschnitt zur Positionierung und Montage der Bügel miteinander umfasst.

4. Verfahren nach einem der Ansprüche 1 bis 3, **dadurch gekennzeichnet, dass** die Lagen gemäß einer selbst tragenden Struktur zusammengebaut werden.

5. Verfahren nach einem der Ansprüche 1 bis 3, **dadurch gekennzeichnet, dass** die Lagen auf einer Montageplatte (19), die mit Bohrungen (20) versehen ist, montiert werden.

6. Verfahren nach einem der Ansprüche 1 bis 5, **dadurch gekennzeichnet, dass** die Montage mit Hilfe einer einzigen Achse (17', 21') und einer Einsatzstange (22) erfolgt.

## Claims

1. Method of producing mechanical parts and objects, in particular prototypes, from a specific computer-aided design of the type comprising the successive phases of:
- manufacturing parts in elementary layers or strata;
- reconstituting all of the strata; and
- assembling the strata,
said strata being the result of a prior decomposition of the part according to planes and one predetermined step or steps, the unitary strata being determined by the decomposition of the part using specific software and being machined in consequence, and comprising:
- a central portion (8) effectively corresponding to the stratum having the sought-after shape and thickness for achieving the finished part; and
- an external portion (11), substantially of the same thickness, enclosing at least partially said central portion,
**characterised in that** divisible bridging portions (10) interconnect said central and external portions, and **in that** positioning and assembling orifices are provided on the external portion, this portion, thanks to the divisible bridging portions, being removed after positioning and assembling.

2. Method according to claim 1, **characterised in that** each stratum comprises circular orifices (16) for positioning the bridging portions and assembling them to one another.

3. Method according to claim 1, **characterised in that** each stratum comprises orifices (16') with a polygonal geometrical cross-section for positioning the bridging portions and assembling them to one another.

4. Method according to any of claims 1 to 3, **characterised in that** the strata are assembled according to a self-supporting structure.

5. Method according to any of claims 1 to 3, **characterised in that** the strata are assembled on a mounting plate (19) provided with bores (20).

6. Method according to any of claims 1 to 5, **characterised in that** assembling is carried out by means of a single spindle (17', 21') and an insert rod (22).
